# EUROPEAN PATENT SPECIFICATION

(11) **EP 2 473 763 B1**
(45) Date of publication and mention of the grant of the patent: **04.03.2015**
(21) Application number: 10749876.8
(22) Date of filing: 08.09.2010
(51) Int. Cl.: B60K 20/06, F16H 61/688, F16H 59/02

(54) **GEAR SHIFT CONTROL**
GANGSCHALTUNGSSTEUERUNG
COMMANDE DE CHANGEMENT DE VITESSE

(30) Priority: 08.09.2009 GB 0915697
(43) Date of publication of application: 11.07.2012
(73) Proprietor: McLaren Automotive Limited, Woking Surrey GU 21 4YH (GB)
(72) Inventor: FELTON, Richard, Woking Surrey GU21 2FB (GB); GLOVER, Richard Anthony, Guildford, Surrey GU1 1SW (GB)
(74) Representative: Slingsby Partners LLP
(86) International application number: PCT/EP2010/063159
(87) International publication number: WO 2011/029836

(56) References cited:
- EP-A2- 1 375 978
- EP-A2- 1 460 316
- US-A1- 2007 157 757

## Description

The present invention relates to a gear shift commander in a motor vehicle, and to the associated regime of control of the vehicle that the gear shift commander can be used to provide.

Motor vehicles can be provided with a transmission containing two clutches, commonly known as a dual-clutch transmission. Sophisticated electronics and hydraulics normally control the clutches in such a transmission. The two clutches operate independently. Generally one of the clutches controls the engagement of the transmission shaft comprising the odd gears. The other of the clutches controls the engagement of the transmission shaft comprising the even gears.

The initiation of a shift is either determined automatically by an electronic system of the motor vehicle, or manually by the driver of the car. When controlled automatically, the motor vehicle selects the appropriate time to change up and/or down between the gears. When controlled manually, the driver selects when to change up and/or down between the gears. The manual selection of the gears is normally triggered using a paddle gear shifter mounted on the steering column or steering wheel. For example, pulling on the right hand paddle may cause an up shift, and pulling on the left hand paddle may cause a down shift in gear (see for instance US 2007/0157757). Alternatively the change in gear can be triggered using a gear stick placed to the side of the driver. In this case pushing or pulling the gear stick would cause the car to change gear.

The dual clutch arrangement allows one of the transmission shafts to be engaged while the other transmission shaft is unengaged. The engaged transmission shaft will have one of the gears contained on that transmission shaft selected. The transmission shaft transfers the drive through this selected gear towards the wheels. The unengaged transmission shaft can also have one of the gears contained on that unengaged transmission shaft selected. The selection of the gear on the unengaged transmission shaft can take place at the time of the gear change. In this case, the selection of the gear will take place followed by the swapping of the engaged and unengaged clutches. This swaps the drive from one transmission shaft to the other.

For example, third gear could be currently selected on the engaged (odd) transmission shaft. The driver could be accelerating until a speed is reached such that a change to fourth gear is required. The driver would initiate the gear change by pulling on the right paddle. This would cause fourth gear to be selected on the unengaged (even) transmission shaft. As fourth gear is selected the clutch connected to the odd transmission shaft is disengaged. The clutch connected to the even transmission shaft can then be engaged. The car is now being driven in fourth gear.

In the example above, fourth gear could not be selected until the gear change was initiated. This means that the drive cannot swap between the transmission shafts until this selection has been made. This delays the gear change. One solution to this problem is to try to predict which gear will be selected next. For example, if the car is accelerating hard then a prediction can be made that the next gear change will be an up shift. Therefore a higher gear will be pre-selected on the unengaged transmission shaft. However, if such a prediction is incorrect then the predicted gear will have to be unselected and another gear selected. The incorrect prediction then leads to a further delay in the gear change. When a motor vehicle is driven enthusiastically or in a race situation such incorrect predictions are more likely to occur because the driver often swaps from accelerating to decelerating and vice versa. Yet enthusiastic driving and race situations are when high performance and thus reduced gear change times are most important.

It would be desirable to provide an improved gear change system which can reduce the delay between gear changes and otherwise improve the performance of a motor vehicle incorporating a dual-clutch transmission.

EP1460316 describes a shift control apparatus and method for an automated twin clutch transmission. The apparatus can detect the start of a shifting operation and so start a pre-shift control sequence. This pre-shift state is held for a predetermined length of time until either the shift state is reached or this length of time expires.

EP1375978 describes a shift control device and a shift control method. The shift control device has detection switches on the up and downshift motions of the device which are located before the up and down shift switches. These detection switches allow the shift control device to discern that there is a high probability of a shifting state being entered.

According to the present invention there is provided a motor vehicle as set out in the accompanying claims.

The gear shift commander is a manually actuable driver input device, such as a / paddle or gear lever.

Embodiments of the invention will now be described, by way of example only, with reference to the accompanying drawings. In the drawings:
Figure 1 shows an exemplary configuration of a number of components of a motor vehicle.
Figure 2 shows a front view of an embodiment of a steering wheel with paddle gear shift commanders.
Figure 3 shows a side view of an embodiment of a steering wheel with paddle gear shift commanders.

In the figures, like reference numerals indicate like parts.

The following description is presented to enable any person skilled in the art to make and use the invention, and is provided in the context of a particular application.

Various modifications to the disclosed embodiments will be readily apparent to those skilled in the art.

The general principles defined herein may be applied to other embodiments and applications without departing from the scope of the present invention as defined in the appended claims. Thus, the present invention is not intended to be limited to the embodiments shown, but is to be accorded the widest scope consistent with the principles and features disclosed herein.

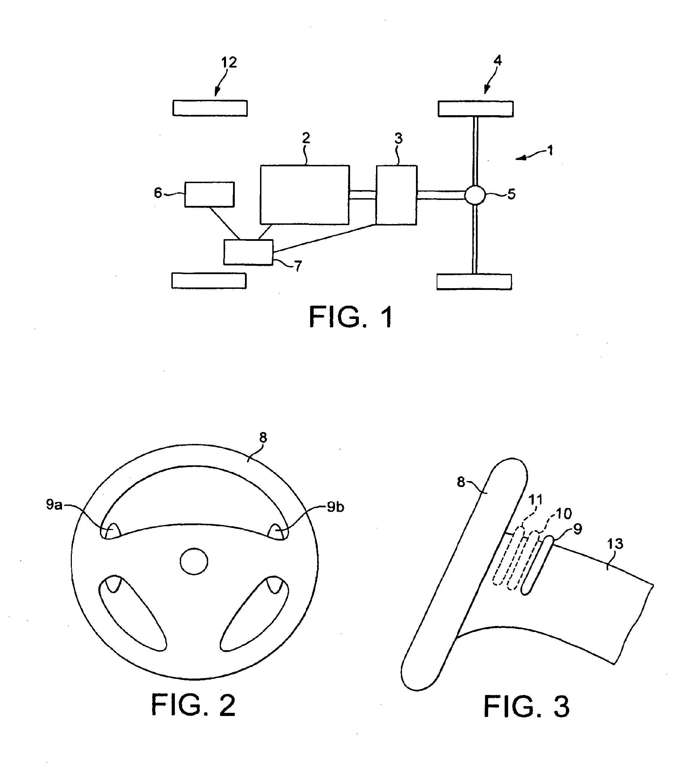

Figure 1 illustrates an exemplary configuration for a motor vehicle 1. This motor vehicle 1 could be a car. The motor vehicle comprises a power source 2. This power source 2 is capable of driving the motor vehicle. The power source 2 could be an internal combustion engine. The internal combustion engine could be powered by petrol or diesel. Alternatively the power source 2 could be a hybrid engine utilising, for example a combination of an internal combustion engine and an electric motor.

Coupled to the power source 2 is a gearbox 3. The motor vehicle can be driven by an output of the gearbox 3. In the example of a rear wheel drive motor vehicle 1 shown in Figure 1, the output of the gearbox 3 could be coupled to a rear differential 5. This rear differential 5 splits the drive of the gearbox so that both of the rear wheels 4 can be driven. Although the rear differential 5 is shown as a separate component, the function of the differential 5 could be included in the gearbox 3. If the motor vehicle 1 were instead front wheel drive, the gearbox 3 could alternatively be coupled to the front wheels 12. In a four-wheel-drive motor vehicle all four wheels could be coupled to the gearbox. The gearbox 3 alters drive ratio between the power source 2 and the differential 5. The gearbox 3 can be a dual-clutch transmission unit.

The motor vehicle 1 is provided with a gear shift commander 6. This gear shift commander 6 provides a control to the driver of the motor vehicle. The driver can use the gear shift commander 6 to control the gear shift of the gearbox 2. The gear shift commander 6 is connected to a controller 7. This controller 7 can accept inputs from the gear shift commander 6, the power source 2, and the gearbox 3. The controller 7 could also accept inputs from other sensors in the car. For example the controller 7 could accept an input from a wheel monitor which determines if one or more of the wheels 4, 12 are slipping. The controller 7 is able to adjust the operation of the gearbox 3 and power source 2 in response to a determination based on the inputs received. For example, the gearbox 3 can be configured to change gear in response to the controller 7 indicating that a gear change is required. The controller could be configured in hardware to process the inputs to form the outputs, or it could execute program code that it stores.

Figure 2 shows a front view of an embodiment of a steering wheel 8 having paddle gear shift commanders 9 mounted on the steering column 13. The paddle gear shift commanders 9 shown in Figure 2 are one example of a gear shift commander 6. The paddle gear shift commanders 9 could alternatively be mounted on the steering wheel 8 so that they rotate with the steering wheel 8. Alternatively, the gear shift commander 6 could take the form of a conventional gear shift stick. This gear shift stick could be mounted on the centre console of the motor vehicle 1, in between the driver and passenger.

As shown in Figure 2, a paddle gear shift commander 9 can be mounted to each side of the steering column 13. The left hand paddle gear shift commander 9a could then be used to cause a down shift. The right hand paddle gear shift commander 9b could be used to cause an up shift.

Each gear shift commander 6 has three states, which are indicated in Figure 3 for the example of a paddle gear shift commander. There is a normal state (as illustrated at 9) in which it rests when it is not being actuated; there is a transition/prepare state 10 and there is a shift state 11. In this example, the commander is mechanically configured so that the transition state 10 is necessarily adopted during transition of the shift paddle from the normal state 9 to the shift state 11. This may be achieved if the paddle must move in order to transition from the normal state to the shift state and the transition state is in the path of that movement. The paddle is equipped with switches that sense which position it is in and provide outputs indicative of the appropriate state. Conveniently the paddle is biased to the normal position, for example by a spring, with the effect that a greater force must be applied to it in order to move it to the shift position than to the transition position. Most preferably the paddle is configured mechanically so that a step change in force is needed to move it past the transition position. In Figure 3 the paddle 9 is shown in the normal state 9. The dotted lines labelled by 10 and 11 show the transition state 10 and shift state 11 respectively.

The operation of the motor vehicle in response to the three states will be described with reference to the components introduced above.

When the motor vehicle 1 is being driven by the power source 2, the gearbox 3 will be operating in a selected gear. In this situation, and when a gear change is not imminent, the gear shift commander 6 will usually be in the normal state 9.

When the driver of the car anticipates that he will want to change gear soon, the driver can move the paddle gear shift commander 9 in to the transition state 10. In response to the gear shift commander entering the transition state 10 the motor vehicle 1 can configure itself in such a way as to be primed for a change in gear. The use of the transition state 10 prior to the change of gear being required means that no inaccurate prediction about the gear change is required.

When the driver then decides actually to change gear, the driver can move the paddle gear shift commander 9 to the shift state 11. In response to the gear shift commander entering this shift state 11, the motor vehicle 1 will change gear. More specifically, the gearbox 3 will make an up or down shift, as appropriate for the commander that is operated. Such an up or down shift will alter the transmission ratio of the gearbox 3.

There are a number of actions that can be undertaken by the motor vehicle 1 when the paddle gear shift commander 9 enters the transition state 10.

The next gear can be pre-selected in the gearbox based on the direction of shift indicated by the driver. This direction is indicated by which of the paddles, left 9a or right 9b, the driver puts in to the transition state 10. This pre-selection can occur because the gearbox is a dual-clutch transmission. In such a gear box, as described above, the gearbox comprises two transmission shafts. One of the transmission shafts will be being used to drive the motor vehicle 1 using the power source 2. The other transmission shaft will be unused at that particular time. The used transmission shaft is coupled to the power source 2 via one of the two clutches present in the gearbox. This one of the clutches will be engaged, or used. The other clutch is coupled to the unused transmission shaft and is unengaged, or unused.

The configuration outlined above means that the next gear to be used can be engaged on the unused transmission shaft. When the gear shift controller 6 enters the shift state 11 then the unused transmission shaft can become the used transmission shaft. The used clutch is disengaged and the unused clutch is engaged. The power source 2 can then drive the motor vehicle 1 through the new, next, gear.

By activating the transition state, the driver can indicate which gear he will want next. The only person who actually knows which gear is going to be selected next is the driver. Therefore the transition state avoids the need for a prediction to be made by the vehicle about which gear is going to be selected next.

Each of the clutches has a drive system associated with it. This drive system controls the engagement and disengagement of that clutch. When the gear shift commander 6 enters the transition state 10, the drive system of the unused clutch can be primed. This means that the unused clutch can be brought closer to being engaged. For example, if the clutch is driven by a hydraulic ram, the ram can be part-pressurised. Subsequently, when the gear shift commander 6 enters the shift state 11 the used clutch can be disengaged and the unused clutch engaged. The priming of the drive system of the unused clutch means that the period of time needed for that clutch to engage can be reduced in comparison to a system that has no transition state. This is because when the clutch is primed in response to the commander reaching the transition state, the unused clutch will either be partly engaged or very close to engagement when the shift commander reaches the shift state.

The power source 2 can also be the subject of modification when the gear shift commander 6 enters the transition state 10. In one example, the operation of the power source 2 can be modified such that although it provides the same torque when the commander is in the transition state 10 as would have done if the commander were in the normal state, it does so with greater fuel flow to the power source. This allows the power source 2 to promptly provide an increased torque after the shift state 11. This is particularly significant when the power source is an engine and the vehicle is shifting gear at a moment when the engine is under low load, and hence has relatively little fuel flowing to it. When there is little fuel flowing to the engine there can be a delay in subsequently increasing output torque because of the need to get fuel flowing to the combustion chamber. Even if the fuel system is primed up to the combustion chamber, fuel can be lost in coating the inlet and/or valve surfaces. If a driver is down-shifting under low load he may be about to accelerate so responsiveness of the engine may be desired. Similarly, it may be desirable for the engine to respond promptly to allow the speed of the engine to be matched to the road speed in the new gear ("rev-matching").

To achieve this, the ignition timing of the engine and the fuel flow provided to the engine can be altered when the shift commander enters the transition state. By ignition timing is meant the moment at which fuel is ignited in the combustion chamber relative to the phase of the crank shaft. In any particular operational state of the engine there will be an ignition timing at which maximum power is provided by the engine. At other states of ignition timing output power is reduced. When the gear shift commander enters the transition state 10 the fuel flow to the engine can be increased whilst simultaneously the ignition timing is adjusted to a non-optimal value so as to maintain the engine's output torque at the same level as it would otherwise have been but with increased fuel flow. The accelerator could be moved whilst the shift commander is in the transition state 10. The ignition timing can then be readjusted to provide the output torque that corresponds to the new position of the accelerator while still maintaining an increased fuel flow. In practice, the accelerator pedal may provide an input to an engine control unit (ECU) which sets operating parameters of the engine. The ECU will typically implement a mapping between possible positions of the accelerator pedal and power or torque outputs of the engine. When the gear shift commander enters the transition state the ECU is signalled and causes the output torque of the engine to be maintained at increased fuel and/or air flow, as described above. Subsequently, whilst the system remains in the transition state (i.e. until a shift occurs) the ECU continues to control the engine to develop torque/power in accordance with the torque/power map but with increased fuel and/air flow over what would normally be the case.

The increased fuel flow wets the inlet surfaces and ensures that the fuel lines are primed up to the combustion chambers so that the engine will respond promptly when an increase in torque is needed. After the gear shift has taken place the engine returns to normal operation. In addition to the increased fuel flow, the flow of air to the combustion chambers could also be increased. It can take a relatively long period of time to increase the air flow to the engine. Therefore, the increased air flow means that the correct air-fuel mixture will already be present when an increase in torque is needed. Instead of adjusting the ignition timing, other parameters of the engine could be altered to give similarly reduced torque for increased fuel flow. For example, valves in the exhaust system could be restricted.

The actions described above can be used together in combination depending on the current condition of the motor vehicle. One aspect of its condition is that the accelerator of the motor vehicle could be fully on, partially on, or fully off. Another aspect of its condition is that the motor vehicle could be driving around a corner, as detected by a steering wheel sensor or a yaw sensor. Another aspect of its condition is the direction of gear change indicated by the driver: i.e. an up shift or a down shift.

A first example is that the accelerator pedal is fully on and the transition state 10 is that for an up shift. In this example the gear with the next highest transmission ratio will be preselected. The drive system of the unused clutch is primed. When the shift state 11 is entered, the used clutch is disengaged, and the unused clutch is engaged. Since the accelerator pedal is fully on, the controller 7 assumes that a fast shift is required and so commands the clutch to be engaged as quickly as possible.

A second example is that the accelerator pedal is fully on and the transition state 10 is that for a down shift. In this example the gear with the next lowest transmission ratio will be preselected. The rest of the gear change proceeds as in the first example.

A third example is that the accelerator pedal is off and the transition state 10 is that for a down shift. In this example the gear with the next lowest transmission ratio will be preselected. The drive system of the unused clutch is primed. The ignition timings and fuel flow in this example can be altered as described above so as to maintain torque but with increased fuel flow and/or air flow. As noted above, this primes the fuel supply system with an excess of fuel ready for subsequent acceleration or rev-matching. This also provides the required amount of air for the same purpose. The speed of clutch engagement could be fast or slow, depending on other operational characteristics of the vehicle.

A fourth example is that the accelerator pedal is partially on and the transition state 10 is that for an up shift. In this example the gear with the next highest transmission ratio will be preselected. Such a situation is likely to occur when the motor vehicle 1 is driving around a corner. This is therefore a situation where a different approach to gear changing is required: a jolt mid-corner is undesirable. In this situation the drive system of the unused clutch can still be primed. However, a fast and violent shift is not required; and a much smoother shift is preferable. The unused clutch can therefore be engaged more smoothly. The ignition timings, fuel flow and/or air flow can also be altered as described above. As noted above, this primes the fuel supply system with an excess of fuel ready for subsequent acceleration or rev-matching. This also provides the required amount of air for the same purpose.

A fifth example is that the accelerator pedal is partially on and the transition state 10 is that for a down shift. In this example the gear with the next lowest transmission ratio will be preselected. As described above this situation is likely to occur when the motor vehicle 1 is driving around a corner. The gear change will proceed in the same manner as for the fourth example.

The driver might intentionally engage the transition state 10 a few moments before he decides to actually change gear. In that situation the gearbox and engine can be pre-set ready for the change and can change and/or increase torque promptly after the shift request. This can be achieved whether or not the transition and shift states of the commander are mechanically related to each other. However, a further advantage can be gained if the commander is configured so that the transition state is necessarily entered when the commander is being transitioned from the normal to the shift state. In this situation the actions associated with the transition state will be taken shortly before a shift occurs, whether or not the driver intended to distinctly engage the transition state. This has been found to reduce shift times by several tens of milliseconds even during normal shifting.

Figure 3 shows both the transition state 10 and the shift state 11 as being in separate physical positions. However, this is for illustration only. In another alternative configuration, the shift paddle could not move between the normal state and one or both of the transition and shift states. In one example, the paddle is equipped with a force sensor which senses that the paddle is in the normal state when no force is applied to it relative to its mounting, in the transition state when a force greater than a first threshold but less than a second, higher threshold is applied to it, and in the shift state when a force greater than the second threshold is applied to it. In a second example, the paddle is equipped with means for sensing whether the driver's skin is in contact with it, for example by inductive or capacitive coupling, and is in the normal state when it is not being touched by the driver, in the transition state when it is being touched by the driver and is not in the shift state, and in the shift state when a force greater than a certain threshold is applied to it, or it is moved to a certain position.

In an alternative configuration, the transition state could be signalled by operation of a separate input device from the input device that can have the shift state. For example, there could be two paddles, non-actuation of both paddles indicating the normal state, actuation of one paddle indicating the transition state and actuation of the other paddle or of both paddles indicating the shift state. Alternatively, there could be a separate controller that allows the driver to signal that a shift in either direction is imminent.

Thus, the vehicle is configured to, when the gear shift commander enters the prepare state, alter the configuration of the vehicle to facilitate a subsequent gear shift and/or to facilitate operation of the vehicle after such a shift. This may be done by altering the configuration of the gearbox and/or the engine and/or other components of the vehicle from their normal settings. In particular, the gearbox may be altered to preselect a gear, most preferably in the same direction as the prepare state is signalled. The engine may be altered to increase its responsiveness to a subsequent demand for an increase in power and/or speed. The actions taken when the prepare state is entered may be different when the engine is under a low load (e.g. off throttle) or not. The actions taken when the prepare state is entered may be different when the prepare state is indicated in respect of an up or a down shift.

The principles described above could be applied to gear shift commanders that take other forms than paddles: for example shift sticks and levers, and even to voice-commanded shifts.

The gearbox need not be a dual-clutch gearbox. Similar principles could be applied to gearboxes having a single drive shaft and a single clutch, two drive shafts and a single clutch, and to gearboxes having fluid clutches. When the commander enters the transition state, the gearbox and engine can be configured in whatever ways are available to prepare it for shifting.

## Claims

1. A motor vehicle (1) comprising:
a power source (2) capable of driving the motor vehicle,
a gearbox (3) coupled to the power source, the gearbox comprising at least two clutches; and
a gear shift commander having a normal state (9), a prepare state (10) and a shift state (11), wherein the gear shift commander is a manually actuable driver input device;
wherein the vehicle is configured to make an up or down shift in response to the gear shift commander entering the shift state; and
wherein when the vehicle is being driven by the power source, the gearbox comprises a used clutch and an unused clutch, the clutches controlling the engagement of transmission shafts of the gearbox to the power source, and the vehicle is configured to, in response to the gear shift commander entering the prepare state, cause the gearbox to undergo a preparatory adjustment in preparation for an up or down shift, the preparatory adjustment in the gearbox comprising priming the drive system of the unused clutch.

2. A motor vehicle according to claim 1, wherein the preparatory adjustment is such as to reduce the time required to subsequently perform an up or down shift.

3. A motor vehicle according to any preceding claim, wherein the preparatory adjustment of the gearbox comprises a pre-selection of a gear for the up or down shift.

4. A motor vehicle according to claim 3, wherein the gearbox comprises two transmission shafts, a used transmission shaft and an unused transmission shaft, each transmission shaft bearing several gear wheels; and the pre-selection of a gear comprises engaging the gear wheel on the unused transmission shaft.

5. A motor vehicle according to any preceding claim, wherein the unused clutch comprises two clutch plates, and priming the drive system of the unused clutch comprises reducing the distance between the clutch plates.

6. A motor vehicle according to any preceding claim, wherein the unused clutch comprises two clutch plates, and priming the drive system of the unused clutch comprises partially engaging the clutch plates.

7. A motor vehicle according to any preceding claim, wherein the vehicle is configured to, in response to the gear shift commander entering the prepare state, cause the gearbox to undergo a preparatory adjustment in preparation for one of an up and down shift; and the vehicle is configured to make the same of an up and down shift in response to the gear shift commander entering the shift state.

8. A motor vehicle according to any preceding claim, wherein the motor vehicle is configured to determine the nature of the preparatory adjustment in dependence on the current transmission ratio of the gearbox and/or the current power output of the power source.

9. A motor vehicle according to any preceding claim, the vehicle is configured to, in response to the gear shift commander entering the prepare state, cause the power source to undergo a preparatory adjustment in preparation for an up or down shift, wherein the preparatory adjustment is such as to increase the responsiveness of the power source.

10. A motor vehicle according to claim 9, wherein the power source is an internal combustion engine, and the preparatory adjustment of the power source comprises an increase in fuel flow and/or air flow into the engine whilst maintaining the output torque of the internal combustion engine.

11. A motor vehicle according to claim 10, wherein the preparatory adjustment of the power source further comprises the alteration of the ignition timing of the engine, and the alteration of the ignition timing of the engine comprises setting a first ignition timing for the engine that does not maximise the engine's power output for its current fuel supply rate.

12. A motor vehicle according to any preceding claim, wherein, in response to the gear shift commander entering the shift state, the motor vehicle is configured to match the output revolutions per minute of the power source to the revolutions per minute of an input of the gearbox to which the output of engine is to be connected after the shift.

13. A motor vehicle according to claim 12, wherein the power source is an internal combustion engine, and the matching is achieved by setting an optimal ignition timing for the engine.

14. A motor vehicle according to any preceding claim, wherein the gear shift commander is configured mechanically to be able to transition directly from the prepare state to the shift state without entering the normal state.

15. A motor vehicle according to any preceding claim, wherein the gear shift commander comprises a movable member (9a, 9b; 9), the state of the gear shift commander depends on the physical position of the moveable member, the shift state is when the moveable member is in a first physical position (11) and the prepare state is when the moveable member is in a second physical position (10).

16. A motor vehicle according to any of claims 1 to 13, wherein the gear shift commander comprises a moveable member (9a, 9b; 9), the state of the gear shift commander depends on the physical position of the moveable member, the shift state is when the moveable member is in a first physical position, and the moveable member is equipped with means for sensing whether the driver's skin is in contact with the movable member and the prepare state is when the moveable member is being touched by the driver and is not in the shift state.

## Patentansprüche

1. Kraftfahrzeug (1), umfassend:
eine Energiequelle (2), die das Kraftfahrzeug antreiben kann,
ein Getriebe (3), das mit der Energiequelle verbunden ist, wobei das Getriebe mindestens zwei Kupplungen umfasst, und
ein Gangschaltungsbefehlsgeber mit einem Normalzustand (9), einem Vorbereitungszustand (10) und einem Schaltzustand (11), wobei der Gangschaltungsbefehlsgeber ein manuell zu betätigendes Fahrereingabegerät ist;
wobei das Fahrzeug so konfiguriert ist, dass es in Reaktion auf den Eintritt des Gangschaltungsbefehlsgebers in den Schaltzustand hoch- oder herunterschaltet, und
wobei, wenn das Fahrzeug von der Energiequelle angetrieben wird, das Getriebe eine verwendete Kupplung und eine nicht verwendete Kupplung beinhaltet, wobei die Kupplungen den Eingriff der Getriebewellen des Getriebes mit der Energiequelle steuern und das Fahrzeug so konfiguriert ist, dass es in Reaktion auf den Eintritt des Gangschaltungsbefehlsgebers in den Vorbereitungszustand das Getriebe zu einer vorbereitenden Einstellung in Vorbereitung auf ein Hoch- oder Herunterschalten veranlasst, wobei die vorbereitende Einstellung im Getriebe die Vorbereitung des Antriebssystems der nicht verwendeten Kupplung umfasst.

2. Kraftfahrzeug gemäß Anspruch 1, wobei die vorbereitende Einstellung von solcher Art ist, dass sich die für ein anschließendes Hoch- oder Herunterschalten benötigte Zeit verringert.

3. Kraftfahrzeug gemäß einem der vorhergehenden Ansprüche, wobei die vorbereitende Einstellung des Getriebes die Vorauswahl eines Gangs für das Hoch- oder Herunterschalten umfasst.

4. Kraftfahrzeug gemäß Anspruch 3, wobei das Getriebe zwei Getriebewellen umfasst, eine verwendete Getriebewelle und eine nicht verwendete Getriebewelle, wobei jede Getriebewelle mehrere Getrieberäder trägt und die Vorauswahl eines Gangs das Ineingriffbringen des Getrieberads an der nicht verwendeten Getriebewelle umfasst.

5. Kraftfahrzeug gemäß einem der vorhergehenden Ansprüche, wobei die nicht verwendete Kupplung zwei Kupplungsplatten umfasst und die Vorbereitung des Antriebssystems der nicht verwendeten Kupplung die Verringerung des Abstands zwischen den Kupplungsplatten umfasst.

6. Kraftfahrzeug gemäß einem der vorhergehenden Ansprüche, wobei die nicht verwendete Kupplung zwei Kupplungsplatten umfasst und die Vorbereitung des Antriebssystems der nicht verwendeten Kupplung das teilweise Ineingriffbringen der Kupplungsplatten umfasst.

7. Kraftfahrzeug gemäß einem der vorhergehenden Ansprüche, wobei das Fahrzeug so konfiguriert ist, dass es in Reaktion auf den Eintritt des Gangschaltungsbefehlsgebers in den Vorbereitungszustand bewirkt, dass das Getriebe eine vorbereitende Einstellung in Vorbereitung auf ein Hoch- oder Herunterschalten durchläuft; und das Fahrzeug so konfiguriert ist, dass es in Reaktion auf den Eintritt des Gangschaltungsbefehlsgebers in den Schaltzustand entsprechend hoch- oder herunterschaltet.

8. Kraftfahrzeug gemäß einem der vorhergehenden Ansprüche, wobei das Fahrzeug so konfiguriert ist, dass es die Art der vorbereitenden Einstellung in Abhängigkeit vom derzeitigen Übersetzungsverhältnis des Getriebes und/oder der derzeitigen Ausgangsleistung der Energiequelle bestimmt.

9. Kraftfahrzeug gemäß einem der vorhergehenden Ansprüche, wobei das Fahrzeug so konfiguriert ist, dass es in Reaktion auf den Eintritt des Gangschaltungsbefehlsgebers in den Vorbereitungszustand bewirkt, dass die Energiequelle eine vorbereitende Einstellung in Vorbereitung auf ein Hoch- oder Herunterschalten durchläuft, wobei die vorbereitende Einstellung solcher Art ist, dass sie die Ansprechempfindlichkeit der Energiequelle erhöht.

10. Kraftfahrzeug gemäß Anspruch 9, wobei die Energiequelle eine Verbrennungskraftmaschine ist, und die vorbereitende Einstellung der Energiequelle eine Erhöhung des Kraftstoffstroms und/oder des Luftstroms in den Motor ist, während das Ausgangsdrehmoment der Verbrennungskraftmaschine aufrechterhalten wird.

11. Kraftfahrzeug gemäß Anspruch 10, wobei die vorbereitende Einstellung der Energiequelle ferner die Änderung der Zündzeitpunkteinstellung des Motors umfasst und die Änderung der Zündzeitpunkteinstellung des Motors die Festlegung einer ersten Zeitpunkteinstellung umfasst, die die Ausgangsleistung des Motors für seine derzeitige Kraftstoffzufuhrrate nicht maximiert.

12. Kraftfahrzeug gemäß einem der vorhergehenden Ansprüche, wobei das Kraftfahrzeug so konfiguriert ist, dass es in Reaktion auf den Eintritt des Gangschaltungsbefehlsgebers in den Schaltzustand die Ausgangsumdrehungen pro Minute der Energiequelle an die Umdrehungen pro Minute eines Getriebeeingangs anpasst, mit dem der Ausgang des Motors nach dem Schaltvorgang verbunden ist.

13. Kraftfahrzeug gemäß Anspruch 12, wobei die Energiequelle eine Verbrennungskraftmaschine ist und die Anpassung durch Festlegen einer optimalen Zündzeitpunkteinstellung erzielt wird.

14. Kraftfahrzeug gemäß einem der vorhergehenden Ansprüche, wobei der Gangschaltungsbefehlsgeber so konfiguriert ist, dass er mechanisch imstande ist, direkt vom Vorbereitungszustand in den Schaltzustand überzugehen, ohne in den Normalzustand zu kommen.

15. Kraftfahrzeug gemäß einem der vorhergehenden Ansprüche, wobei der Gangschaltungsbefehlsgeber ein bewegliches Glied (9a, 9b, 9) umfasst, der Zustand des Gangschaltungsbefehlsgebers von der physischen Position des beweglichen Glieds abhängt, der Schaltzustand ist, wenn das bewegliche Glied in einer ersten physischen Position (11) ist, und der Vorbereitungszustand ist, wenn das bewegliche Glied in einer zweiten physischen Position (10) ist.

16. Kraftfahrzeug gemäß einem der Ansprüche 1 bis 13, wobei der Gangschaltungsbefehlsgeber ein bewegliches Glied (9a, 9b, 9) umfasst, der Zustand des Gangschaltungsbefehlsgebers von der physischen Position des beweglichen Glieds abhängt, der Schaltzustand ist, wenn das bewegliche Glied in einer ersten physischen Position ist, und das bewegliche Glied mit einem Mittel ausgestattet ist, das erfassen kann, ob die Haut des Fahrers in Kontakt mit dem beweglichen Glied ist, und der Vorbereitungszustand ist, wenn das bewegliche Glied vom Fahrer berührt wird und nicht im Schaltzustand ist.

## Revendications

1. Véhicule à moteur (1) comprenant :
une source de puissance (2) apte à propulser le véhicule à moteur,
une boîte de vitesses (3) couplée à la source de puissance, la boîte de vitesses comprenant au moins deux embrayages ; et
une commande de changement de vitesses possédant un état Normal (9), un état Préparer (10) et un état Changement (11), cas dans lequel la commande de changement de vitesses est un dispositif d'entrée apte à être actionné manuellement par le conducteur ;
cas dans lequel le véhicule est configuré de façon à effectuer un passage à une vitesse supérieure ou une rétrogradation en réaction au fait que la commande de changement de vitesses entre dans l'état Changement ; et
cas dans lequel, lorsque le véhicule est en train d'être propulsé par la source de puissance, la boîte de vitesses comporte un embrayage utilisé et un embrayage non utilisé, les embrayages pilotant l'engrènement des arbres de transmission de la boîte de vitesses avec la source de puissance, et en réaction au fait que la commande de changement de vitesse entre dans l'état Préparer, le véhicule est configuré de façon à obliger la boîte de vitesses à subir un ajustement préparatoire à titre de préparation pour un passage à une vitesse supérieure ou une rétrogradation, l'ajustement préparatoire dans la boîte de vitesses comprenant l'amorçage du système d'entraînement de l'embrayage non utilisé.

2. Véhicule à moteur selon la revendication 1, l'ajustement préparatoire étant tel qu'il permet de réduire la durée requise pour effectuer ultérieurement un passage à une vitesse supérieure ou une rétrogradation.

3. Véhicule à moteur selon l'une quelconque des revendications précédentes, l'ajustement préparatoire de la boîte de vitesses comprenant une présélection d'une vitesse en vue du passage à une vitesse supérieure ou d'une rétrogradation.

4. Véhicule à moteur selon la revendication 3, la boîte de vitesses comprenant deux arbres de transmission, un arbre de transmission utilisé et un arbre de transmission non utilisé, chaque arbre de transmission portant plusieurs roues dentées ; et la présélection d'une vitesse comprenant la mise en prise de la roue dentée sur l'arbre de transmission non utilisé.

5. Véhicule à moteur selon l'une quelconque des revendications précédentes, l'embrayage inutilisé comprenant deux plateaux d'embrayage, et l'amorçage du système d'entraînement de l'embrayage inutilisé comprenant la réduction de la distance entre les plateaux d'embrayage.

6. Véhicule à moteur selon l'une quelconque des revendications précédentes, l'embrayage inutilisé comprenant deux plateaux d'embrayage, et l'amorçage du système d'entraînement de l'embrayage inutilisé comprenant une mise en prise partielle avec les plateaux d'embrayage.

7. Véhicule à moteur selon l'une quelconque des revendications précédentes, en réaction au fait que la commande de changement de vitesse entre dans l'état Préparer, le véhicule étant configuré de façon à obliger la boîte de vitesses à subir un ajustement préparatoire à titre de préparation pour l'un des modes suivants, soit un passage à une vitesse supérieure soit une rétrogradation ; et le véhicule étant configuré de façon à effectuer ce même passage à une vitesse supérieure et une rétrogradation en réaction au fait que la commande de changement de vitesse entre dans l'état Changement.

8. Véhicule à moteur selon l'une quelconque des revendications précédentes, le véhicule à moteur étant configuré de façon à déterminer la nature de l'ajustement préparatoire en fonction du rapport de transmission actuel de la boîte de vitesse et/ou de la sortie de puissance actuelle de la source de propulsion.

9. Véhicule à moteur selon l'une quelconque des revendications précédentes, en réaction au fait que la commande de changement de vitesse entre dans l'état Préparer, le véhicule étant configuré de façon à obliger la source de propulsion à subir un ajustement préparatoire à titre de préparation pour un passage à une vitesse supérieure ou une rétrogradation, cas dans lequel l'ajustement préparatoire est tel qu'il permet d'augmenter la réactivité de la source de propulsion.

10. Véhicule à moteur selon la revendication 9, la source de propulsion étant un moteur à combustion interne, et l'ajustement préparatoire de la source de propulsion comprenant un accroissement du débit de carburant et/ou du flux d'air se rendant au moteur tout en maintenant le couple de sortie du moteur à combustion interne.

11. Véhicule à moteur selon la revendication 10, l'ajustement préparatoire de la source de propulsion comprenant en outre la modification du calage de l'allumage du moteur, et la modification du calage d'allumage du moteur comprenant le réglage d'un premier calage de l'allumage pour le moteur qui ne maximise pas la sortie de puissance du moteur pour son débit d'alimentation actuel en carburant.

12. Véhicule à moteur selon l'une quelconque des revendications précédentes, en réaction au fait que la commande de changement de vitesses entre dans l'état Changement, le véhicule à moteur étant configuré de façon à adapter les tours/minute de sortie de la source de propulsion aux tours/minute d'une entrée de la boîte de vitesses à laquelle la sortie du moteur doit être raccordée après le changement.

13. Véhicule à moteur selon la revendication 12, la source de propulsion étant un moteur à combustion interne, et l'adaptation étant accomplie grâce à un réglage du calage optimal de l'allumage pour le moteur.

14. Véhicule à moteur selon l'une quelconque des revendications précédentes, la commande de changement de vitesses étant configurée de façon à pouvoir, en termes mécaniques, passer directement de l'état Préparer à l'état Changement sans entrer dans l'état Normal.

15. Véhicule à moteur selon l'une quelconque des revendications précédentes, la commande de changement de vitesses comprenant un élément mobile (9a ; 9b ; 9), l'état de la commande de changement de vitesses dépendant de la position physique de l'élément mobile, l'état Changement étant l'état lorsque l'élément mobile se trouve dans une première position physique (11) et l'état Préparer étant l'état lorsque l'élément mobile se trouve dans une deuxième position physique (10).

16. Véhicule à moteur selon l'une quelconque des revendications 1 à 13, la commande de changement de vitesses comprenant un élément mobile (9a ; 9b ; 9), l'état de la commande de changement de vitesses dépendant de la position physique de l'élément mobile, l'état Changement étant l'état lorsque l'élément mobile se trouve dans une première position physique, et l'élément mobile est pourvu de moyens pour détecter si la peau du conducteur est en contact avec l'élément mobile, et l'état Préparer étant l'état lorsque l'élément mobile est en train d'être touché par le conducteur et ne se trouve pas dans l'état Changement.
